# EUROPÄISCHE PATENTANMELDUNG

(11) **EP 1 785 630 A1**
(43) Veröffentlichungstag der Anmeldung: **16.05.2007**
(21) Anmeldenummer: 06019826.4
(22) Anmeldetag: 22.09.2006
(51) Int. Cl.: F04C 25/00, F04B 53/10

(54) **Pumpe**

(30) Priorität: 11.11.2005 DE 202005017612 U
(71) Anmelder: M & C Products Analysentechnik GmbH, 40885 Ratingen (DE)
(72) Erfinder: Rumm, Hans-Jörg, 46145 Oberhausen (DE)
(74) Vertreter: Berkenbrink, Kai-Oliver

(57) **Zusammenfassung**

Die Erfindung betrifft eine Pumpe zur Förderung von Gas von einer Gasentnahmesonde zu einer Gasanalyseeinrichtung sowie eine Einrichtung zur Entnahme und Analyse von Gas.

## Beschreibung

Die Erfindung betrifft eine Pumpe zur Förderung von Gas von einer Gasentnahmesonde zu einer Gasanalyseeinrichtung sowie eine Einrichtung zur Entnahme und Analyse von Gas.

Zur Analyse eines Gases, beispielsweise des Abgases eines Kraftwerkes, werden Gasanalyseeinrichtungen, insbesondere sogenannte Gasanalysatoren eingesetzt. Das zu analysierende Gas wird dem Gasstrom mittels einer Gasentnahmesonde entnommen und mittels einer Pumpe der Gasanalyseeinrichtung zugeführt. In der Gasanalyseeinrichtung wird das Gas analysiert.

Gasentnahmesonde, Pumpe und Gasanalyseeinrichtung sind über Schlauchstücke oder sonstige Gasleitungen, durch die das zu analysierende Gas strömt, strömungstechnisch miteinander verbunden.

Von besonderer Bedeutung für die Analyse des Gases ist, dass der Gasanalyseeinrichtung das Gas mit einem definierten Druck und in einer definierten Menge zugeleitet wird. Bevorzugt liegen Gasdruck und -menge innerhalb eines engen, genau definierten Rahmens. Hierzu ist es notwendig, dass der Gasausgangsdruck der Pumpe, also der Druck, unter dem das Gas auf der Gasausgangsseite der Pumpe aus dieser herausgepumpt wird, exakt einstellbar ist.

Um den Gasausgangsdruck der Pumpe einstellen zu können, wird dieser üblicherweise ein Vordruckregler vorgeschaltet, der in den Schlauchabschnitt zwischen Gasentnahmesonde und Pumpe geschaltet ist.

Hierzu ist der Vordruckregler über ein erstes Schlauchstück mit der Gasentnahmesonde und über ein zweites Schlauchstück mit der Pumpe verbunden.

Der Vordruckregler, der regelmäßig als Überdruckventil ausgebildet ist, wird auf einen bestimmten Druckwert eingestellt, ab dem das Ventil auslöst und den Gasüberdruck abbaut. Auf diese Weise wird der Pumpe das zu analysierende Gas mit einem definierten Maximaldruck zugeleitet.

Die wie vorstehend beschriebenen Einrichtungen zur Entnahme und Analyse von Gas haben sich zwar grundsätzlich bewährt. Sie weisen dennoch einige Nachteile auf.

So neigt der Vordruckregler zur Anlagerung von Schmutz. Dies liegt insbesondere auch an den Schlauchverbindungen, über die der Vordruckregler in den Gasweg eingebaut ist. Denn bei einem Lösen und anschließenden Wiederverbinden des Vordruckreglers mit den Schlauchstücken, beispielsweise bei Umbau- oder Wartungsarbeiten an der Pumpe, können Schmutzpartikel in den Vordruckregler eingetragen werden.

Da es sich bei dem Vordruckregler und der Pumpe, wie vorstehend beschrieben, um unabhängige Komponenten handelt, kann es ferner dazu kommen, dass ein Vordruckregler eingesetzt wird, der nicht ausreichend auf die Pumpe abgestimmt ist.

Schließlich ist insbesondere problematisch, dass es auf dem Gasleitungsweg zwischen dem Vordruckregler und der Pumpe zu einem Eintrag von Schmutz oder zur Bildung von Kondensflüssigkeit kommen kann. Hierdurch können die Gasdruckverhältnisse zwischen dem Vordruckregler und der Pumpe derart verfälscht werden, dass der Gasausgangsdruck der Pumpe durch den Vordruckregler nicht mehr korrekt eingestellt werden kann.

Der Erfindung liegt die Aufgabe zugrunde, eine Pumpe zur Förderung von Gas von einer Gasentnahmesonde zu einer Gasanalyseeinrichtung zur Verfügung zu stellen, durch die der Gasausgangsdruck der Pumpe zuverlässig einstellbar ist.

Erfindungsgemäß gelöst wird diese Aufgabe durch die Zurverfügungstellung einer Pumpe zur Förderung von Gas von einer Gasentnahmesonde zu einer Gasanalyseeinrichtung, die eine integrierte Einrichtung zur Einstellung des Gasausgangsdrucks der Pumpe aufweist.

Im Gegensatz zu den bisherigen Einrichtungen, ist die Einrichtung zur Einstellung des Gasausgangsdrucks der Pumpe also nicht über ein zusätzliches Schlauch- beziehungsweise Leitungsstück mit der Pumpe verbunden, sondern die Einrichtung zur Einstellung des Gasausgangsdrucks ist erfindungsgemäß ein integraler Bestandteil der Pumpe.

Erfindungsgemäß hat sich herausgestellt, dass durch eine entsprechend in die Pumpe integrierte Einrichtung zur Einstellung des Gasausgangsdrucks die obengenannten Nachteile, die bei externen Vordruckreglern auftreten, zuverlässig vermieden werden können.

So muss die Einrichtung zur Einstellung des Gasausgangsdrucks der Pumpe (im Folgenden auch nur "Druckregler" genannt) bei einer Reparatur oder Wartung der Pumpe nicht von dieser getrennt werden. Ein Schmutzeintrag in den Druckregler kann hierdurch vermieden werden. Ebenfalls vermieden werden kann, dass ein Druckregler verwendet wird, der nicht genau auf die Pumpe abgestimmt ist. Vielmehr kann der exakt auf die Pumpe abgestimmte Druckregler auch bei Wartungs- und Reparaturarbeiten der Pumpe stets mit dieser verbunden bleiben, wodurch ein Fehleinbau eines Druckreglers vermieden wird.

Es kann vorgesehen sein, dass der Druckregler am Pumpengehäuse, bevorzugt am Pumpenkopf, angeordnet ist.

Die Anordnung des Druckreglers am Pumpenkopf hat insbesondere den Vorteil, dass der Gasraum im Pumpenkopf strömungstechnisch unmittelbar mit dem Druckregler verbunden sein kann. Bei dieser Ausführungsform werden also keinerlei zusätzliche Gasleitungen benötigt, durch die der Gasraum im Pumpenkopf mit dem Druckregler verbunden wäre. Vielmehr mündet der Gasraum im Pumpenkopf bevorzugt unmittelbar in den Druckregler. Dadurch existiert kein Gasleitungsweg zwischen Pumpe und Druckregler, in dem sich Schmutz oder Kondenswasser sammeln könnte. Der Druckregler steht unmittelbar in Kontakt mit dem Gasraum im Pumpenkopf, so dass der Gasdruck im Gasraum und dadurch entsprechend auch der Gasausgangsdruck der Pumpe unmittelbar durch den Druckregler eingestellt werden kann. Insgesamt ist durch die Integration des Druckreglers an der Pumpe damit nicht nur der Gasausgangsdruck der Pumpe zuverlässig einstellbar, sondern auch eine definierte Gasfördermenge auf der Ausgangsseite der Pumpe.

Durch den erfindungsgemäß in die Pumpe integrierten Druckregler kann die Fördermenge des Gases auf der Ausgangsseite der Pumpe auch bei Druckschwankungen des Gases auf der Eingangsseite der Pumpe konstant gehalten werden. Beispielsweise kann die Gasfördermenge auch bei Eingangsdruckschwankungen von 0,5 bis 1 bar konstant gehalten werden. Gleichzeitig kann der Gasausgangsdruck konstant gehalten werden, beispielsweise bis zu einem Ausgangsdruck von 300 mbar bei Eingangsdruckschwankungen von 0,5 bis 1 bar.

Bei der Einrichtung zur Einstellung des Gasausgangsdrucks der Pumpe kann es sich um eine beliebige Einrichtung nach dem Stand der Technik handeln, durch die ein Gasdruck, insbesondere ein Maximalgasdruck, einstellbar ist. Bevorzugt kann es sich um einen Vordruckregler handeln. Die Einrichtung zur Einstellung des Gasausgangsdrucks der Pumpe beziehungsweise der Vordruckregler kann insbesondere in Form eines Überdruckventils ausgebildet sein. Das Überdruckventil kann auf einen definierten Überdruckwert eingestellt sein (beispielsweise einen Wert im Bereich von 50 bis 300 mbar, im Bereich von 100 bis 200 mbar, also beispielsweise 150mbar), ab dem das Ventil auslöst und einen Gasüberdruck abbaut, indem es Gas, insbesondere über einen Bypass, entweichen lässt.

Besonders bevorzugt kann die Einrichtung zur Einstellung des Gasausgangsdrucks der Pumpe als Bypassvordruckregler ausgebildet sein. Strömungstechnisch kann die Einrichtung zur Einstellung des Gasausgangsdrucks der Pumpe in diesem Fall in einen Gasweg geschaltet sein, der die Pumpe überbrückt, sie wird also parallel und nicht - wie bisher - in Reihe zur Pumpe geschaltet. Der Bypass kann von der Einrichtung zur Einstellung des Gasausgangsdrucks der Pumpe in den Gasleitungsweg hinter der Ausgangsseite der Pumpe münden, also den strömungstechnisch hinter der Pumpe liegenden Gasleitungsweg.

Der Druckregler kann auf beliebige Art und Weise am Pumpengehäuse befestigt sein, beispielsweise kann der Druckregler am Pumpengehäuse beziehungsweise am Pumpenkopf angeschraubt sein.

Nach einer Ausführungsform ist vorgesehen, dass der Gasraum im Pumpenkopf der Pumpe über eine einzige Verbindung strömungstechnisch unmittelbar mit dem Druckregler verbunden ist. Im Gegensatz zum Stand der Technik, bei dem der Vordruckregler über einen separaten Gaseinlass und einen separaten Gasauslass an die beiden Schlauchstücke gekoppelt war, ist bei dieser Ausführungsform nur eine einzige Zuleitung zum Druckregler notwendig. Der Druckregler ist hierdurch wesentlich einfacher aufgebaut. Zum anderen ist die Gefahr eines etwaigen Schmutzeintrags in den Druckregler wesentlich reduziert.

Bei der Pumpe kann es sich um eine beliebige Pumpe nach dem Stand der Technik handeln, bevorzugt um eine Membranpumpe.

Die Pumpe kann Bestandteil einer Einrichtung zur Entnahme und Analyse von Gas sein, die eine Gasentnahmesonde, eine dieser strömungstechnisch nachgeschaltete Pumpe der vorgenannten Art sowie eine dieser strömungstechnisch nachgeschaltete Gasanalyseeinrichtung umfasst.

In den Gasweg zwischen Gasentnahmesonde und Gasanalyseeinrichtung können bei dieser Einrichtung zur Entnahme und Analyse von Gas beliebige weitere Komponenten geschaltet sein. Insbesondere kann beispielsweise vorgesehen sein, in den Gasweg zwischen der Gasentnahmesonde und der Pumpe einen Gaskühler zu schalten.

Sämtliche der vorgenannten Merkmale der Pumpe sowie der Einrichtung zur Entnahme und Analyse von Gas können beliebig miteinander kombiniert werden.

Ein Ausführungsbeispiel der anmeldungsgemäßen Pumpe sowie der Einrichtung zur Entnahme und Analyse von Gas werden anhand der nachfolgenden Figurenbeschreibung näher erläutert.

In den nachfolgenden Figuren zeigt
- Figur 1: ein Flussdiagramm einer Einrichtung zur Entnahme und Analyse von Gas nach dem Stand der Technik,
- Figur 2: ein Flussdiagramm einer Einrichtung zur Entnahme und Analyse von Gas gemäß der vorliegenden Anmeldung und
- Figur 3: eine Pumpe zur Förderung von Gas gemäß der vorliegenden Anmeldung in einer seitlichen Ansicht im Bereich des Pumpenkopfes.

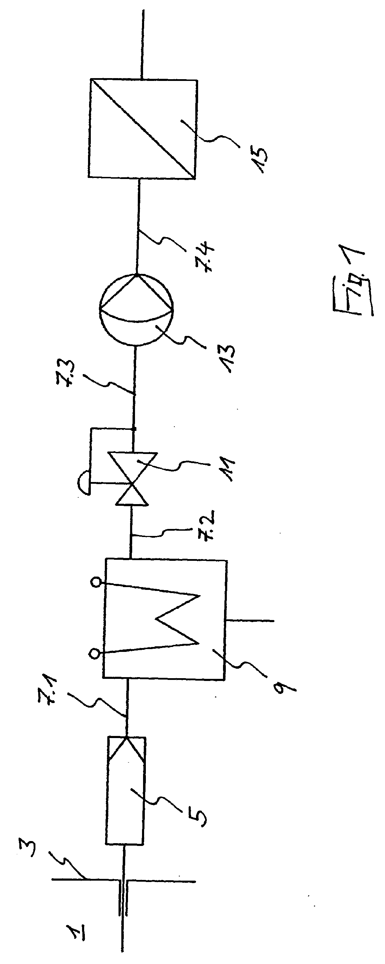

Im Flussdiagramm nach Figur 1 strömt ein zu analysierendes Gas 1 in einem Kamin 3. In den Kamin 3 ist eine Gasentnahmesonde 5 eingeführt, die dem Kamin 3 eine Gasprobe entnimmt. Über ein erstes Schlauchstück 7.1 wird das zu analysierende Gas 1 von der Gasentnahmesonde 5 zunächst einem Gaskühler 9 zugeführt. Über ein weiteres Schlauchstück 7.2 wird das zu analysierende Gas 1 einem Bypassvordruckregler 11 zugeleitet. Von diesem wird das Gas 1 zunächst über ein Schlauchstück 7.3 weiter zu einer Membranpumpe 13 und von dieser über ein letztes Schlauchstück 7.4 schließlich zu einem Gasanalysator 15 geleitet.

Wie oben beschrieben, ist bei einer solchen Einrichtung nach dem Stand der Technik insbesondere der zwischen den Schlauchstücken 7.2 und 7.3 geschaltete Bypassvordruckregler 11 problematisch. Im Schlauchabschnitt 7.3 kann sich, wie oben ebenfalls bereits beschrieben, Schmutz und Kondensflüssigkeit ansammeln, die die Einstellung des Drucks in der Pumpe 13 und insbesondere des Gasausgangsdrucks durch den Bypassvordruckregler 11 behindern.

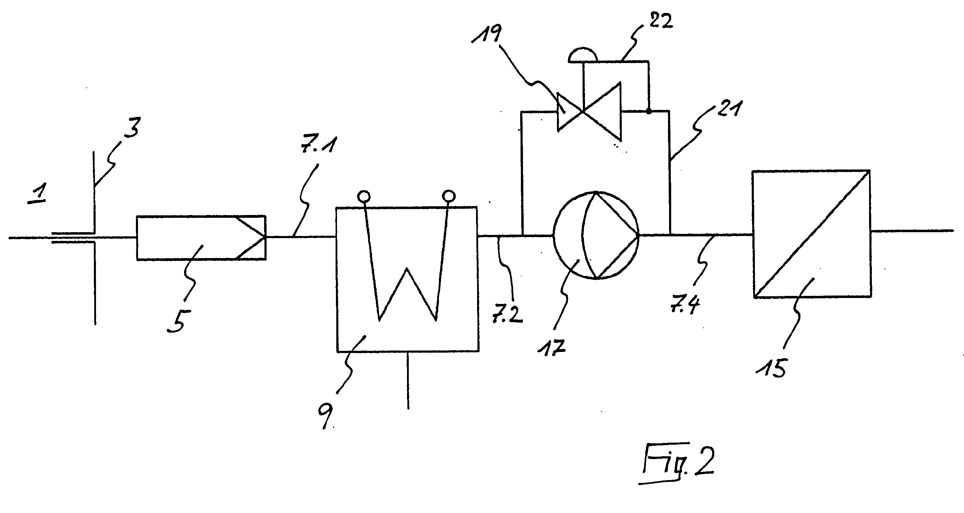

In Figur 2, die eine Einrichtung zur Entnahme und Analyse von Gas gemäß der vorliegenden Anmeldung darstellt, sind die den Gegenständen nach Figur 1 entsprechenden Gegenstände mit entsprechenden Bezugszeichen versehen. Wesentlicher Unterschied zu der Einrichtung nach Figur 1 ist die Pumpe 17, in die eine Einrichtung zur Einstellung des Gasausgangsdrucks der Pumpe 17 in Form eines Bypassvordruckreglers 19 integriert ist.

Strömungstechnisch ist der Bypassvordruckreglers 19 in einen Gasweg 21 geschaltet, der parallel zu der Pumpe 17 verläuft. Der Bypass 22 verläuft von dem Bypassvordruckreglers 19 in den Gasweg 21 auf der Ausgangsseite der Pumpe 17.

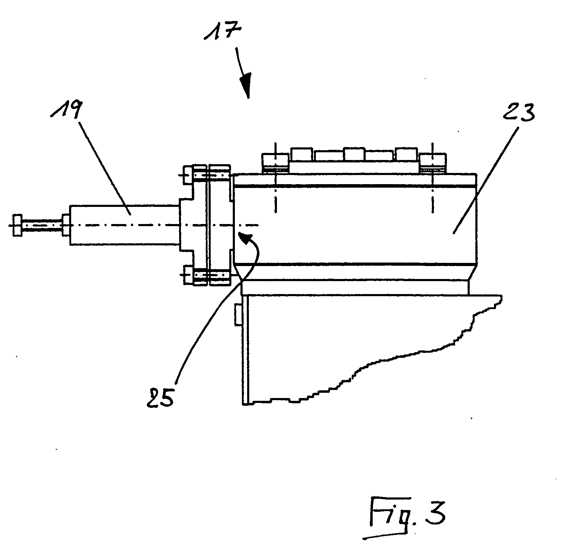

Figur 3 ist eine seitliche Ansicht eines Ausführungsbeispiels einer anmeldungsgemäßen Pumpe 17 im Bereich des Pumpenkopfes 23. Die Pumpe 17 ist als Membranpumpe ausgebildet.

Im Bereich des Pumpenkopfes 23 ist die Einrichtung zur Einstellung des Gasausgangsdrucks der Pumpe in Form eines Beipassvordruckreglers 19 an das Pumpengehäuse angeflanscht. Der als Überdruckventil ausgebildete Bypassvordruckregler 19 ist über eine einzige Verbindung 25 strömungstechnisch unmittelbar mit dem Gasraum im Pumpenkopf 23 verbunden.

Beim Ausführungsbeispiel nach Figur 3 steht der Bypassvordruckregler 19 radial von der Seitenwandung des Pumpenkopfes ab. Es ist jedoch auch jede andere Art einer Anordnung am Pumpenkopf 23 möglich.

## Patentansprüche

1. Pumpe zur Förderung von Gas von einer Gasentnahmesonde zu einer Gasanalyseeinrichtung, **dadurch gekennzeichnet, dass** sie eine integrierte Einrichtung (19) zur Einstellung des Gasausgangsdrucks der Pumpe (17) aufweist.

2. Pumpe nach Anspruch 1, bei der die Einrichtung (19) zur Einstellung des Gasausgangsdrucks der Pumpe (17) am Pumpengehäuse angeordnet ist.

3. Pumpe nach Anspruch 1, bei der die Einrichtung (19) zur Einstellung des Gasausgangsdrucks der Pumpe (17) am Pumpenkopf (23) angeordnet ist.

4. Pumpe nach Anspruch 1, bei der der Gasraum im Pumpenkopf (23) strömungstechnisch unmittelbar mit der Einrichtung (19) zur Einstellung des Gasausgangsdrucks der Pumpe (17) verbunden ist.

5. Pumpe nach Anspruch 1, bei der der Gasraum im Pumpenkopf (23) über eine einzige Verbindung (25) strömungstechnisch unmittelbar mit der Einrichtung (19) zur Einstellung des Gasausgangsdrucks der Pumpe (17) verbunden ist.

6. Pumpe nach Anspruch 1, bei der die Einrichtung (19) zur Einstellung des Gasausgangsdrucks der Pumpe (17) am Pumpenkopf (23) angeschraubt ist.

7. Pumpe nach Anspruch 1 mit einer Einrichtung (19) zur Einstellung des Gasausgangsdrucks der Pumpe (17) in Form eines Überdruckventils (19).

8. Pumpe nach Anspruch 1 in Form einer Membranpumpe (17).

9. Einrichtung zur Entnahme und Analyse von Gas, umfassend eine Gasentnahmesonde (5), eine dieser strömungstechnisch nachgeschaltete Pumpe (17) gemäß Anspruch 1 sowie eine dieser strömungstechnisch nachgeschaltete Gasanalyseeinrichtung (15).
